# EUROPÄISCHE PATENTANMELDUNG

(11) **EP 1 312 865 A1**
(43) Veröffentlichungstag der Anmeldung: **21.05.2003**
(21) Anmeldenummer: 01127137.6
(22) Anmeldetag: 15.11.2001
(51) Int. Cl.: F23R 3/00, F23R 3/50, F23R 3/60

(54) **Ringbrennkammer für eine Gasturbine**

(71) Anmelder: SIEMENS AKTIENGESELLSCHAFT, 80333 München (DE)
(72) Erfinder: Liebe, Roland, Dr., 40789 Monheim (DE)

(57) **Zusammenfassung**

Um eine Ringbrennkammer (1) für eine Gasturbine anzugeben, die einfach aufgebaut und für den Liner einer geschlossenen Kühlung geeignet ist, wird mit der Erfindung eine Ringbrennkammer (1) für eine Gasturbine vorgeschlagen mit mindestens einer Einlassöffnung für einen Brenner (5) und einem in einen Turbinenraum mündenden Auslass (8), wobei die Ringbrennkammer (1) eine einen Ringraum begrenzende Außenwandung und einen in dem Ringraum angeordneten, ringförmigen Liner (4) zum Führen von Heißgas von der mindestens einen Eintrittsöffnung zu dem Auslass (8) aufweist, wobei zwischen dem Liner (4) und der Außenwandung (3) ein Spaltraum (7) zur Durchströmung mit einem Kühlmedium belassen ist.

## Beschreibung

Die Erfindung betrifft eine Ringbrennkammer für eine Gasturbine mit mindestens einer Einlassöffnung für einen Brenner und einem in einen Turbinenraum mündenden Auslass. Die Erfindung betrifft ferner eine Gasturbine mit einer solchen Ringbrennkammer.

Gasturbinen finden neben der Anwendung zum Erzeugen einer Vorschubkraft, beispielsweise in Luftfahrzeugen, in der Kraftwerkstechnik verbreitete Anwendung. Ein Brennstoff/Luft-Gemisch wird gezündet und verbrennt in der Brennkammer. Dabei expandieren die entstehenden, heißen Verbrennungsgase in Richtung eines der Brennkammer nachgeschalteten Turbinenraumes, treffen dort auf eine Anordnung aus Leitschaufeln und Laufschaufeln und treiben die Laufschaufeln und somit den mit den Laufschaufeln verbundenen Rotor der Turbine an. Die so gewonnene mechanische Energie kann schließlich beispielsweise zur Stromerzeugung genutzt werden.

Bezüglich der Konstruktion der Turbinenbrennkammer gibt es zwei grundsätzlich verschiedene Ansätze. So sind neben den Ringbrennkammern (RBK), auf die sich die Erfindung bezieht, noch Brennkammeranordnungen mit mehreren Einzelbrennkammern, den sogenannten Cans, bekannt. Bei der Ringbrennkammer, auf die sich die vorliegende Erfindung bezieht, wird von mindestens einem, üblicherweise mehreren Brennern, gezündetes Gasgemisch in eine ringförmige Brennkammer eingeleitet, in der es sich gleichmäßig verteilt und in einem ringförmigen Strom in Richtung der radial um eine Rotorwelle angeordneten Leitund Laufschaufeln des Turbinenraumes strömt. Die bei der Verbrennung entstehenden, hohen Temperaturen wirken auf die Wandungen der Ringbrennkammer ein, so dass es zur Kühlung dieser Wandungen besonderer Anforderungen bedarf.

Hierzu sind verschiedene Kühlkonzepte aus dem Stand der Technik bekannt. So existieren beispielsweise Kühlsysteme mit Dampf, sogenannte Dampfkühlungen, und solche mit Luft, sogenannte Luftkühlungen. Abhängig von der Führung des Kühlmediums wird darüber hinaus zwischen sogenannten offenen Kühlungen und sogenannten geschlossenen Kühlungen unterschieden. Bei der offenen Luftkühlung beispielsweise wird Kühlluft an die zu kühlenden Gehäuseteile geleitet und schließlich abgeführt. So kann die Kühlluft beispielsweise an den zu kühlenden Stellen direkt in die Brennkammer eingeleitet werden, um gemeinsam mit dem bei der Verbrennung entstehenden Heißgas in Richtung des Turbinenraumes zu gelangen. Die Kühlluft kann bei einer offenen Kühlung jedoch auch aus dem Turbinengehäuse herausgeleitet werden. Ein Problem der offenen Luftkühlung ist dabei, dass der zur Kühlung erforderliche Luftanteil der insgesamt für die Turbine zur Verfügung stehenden Luftversorgung entnommen werden muß, womit dieser Anteil der Verbrennung nicht mehr zur Verfügung steht. Da dadurch einerseits die Effizienz der Turbine insgesamt gesenkt wird, andererseits eine aus Umweltgesichtspunkten "saubere" Verbrennung erschwert wird, ist das Konzept der offenen Luftkühlung dem nachfolgend erläuterten Konzept der geschlossenen Luftkühlung unterlegen.

Die geschlossene Luftkühlung, die vorrangig für Brennkammern des sogenannten Can-Typs Verwendung findet, nutzt die zur Kühlung der Brennkammerwandung eingesetzte Kühlluft vollständig als Verbrennungsluft. Kühlverluste treten somit nicht auf, es besteht kein zusätzlicher Bedarf für Kühlluft.

Für einen temperaturbeständigen Aufbau sind bekannte Ringbrennkammern aus dem Stand der Technik mit einer Innenverkleidung, üblicherweise aus einer Vielzahl von termpaturfesten, beispielsweise keramischen, Elementen, versehen, wobei zwischen der Innenverkleidung und dem eigentlichen Ringbrennkammergehäuse ein Spaltraum zur Durchleitung des Kühlmediums belassen ist. Dieser Aufbau erweist sich einerseits als kompliziert, da er eine Vielzahl von Teilen involviert, er ist andererseits wegen der zwischen den einzelnen Auskleidungssegmenten bestehenden Spalte für die Ausbildung einer geschlossenen Luftkühlung nicht geeignet.

**Aufgabe** der vorliegenden Erfindung ist es daher, eine Ringbrennkammer für eine Gasturbine der eingangs genannten Art anzugeben, welche einfach aufgebaut und für den Liner einer geschlossenen Kühlung geeignet ist.

Zur **Lösung** dieser Aufgabe wird mit der Erfindung eine Ringbrennkammer für eine Gasturbine mit mindestens einer Einlassöffnung für einen Brenner und einem in einen Turbinenraum mündenden Auslass vorgeschlagen, bei der die Ringbrennkammer eine einen Ringraum begrenzende Außenwandung und einen in dem Ringraum angeordneten, ringförmigen Liner zum Führen von Heißgas von der mindestens einen Eintrittsöffnung zu dem Auslass aufweist, wobei zwischen dem Liner und der Außenwandung ein Spaltraum zur Durchströmung mit einem Kühlmedium belassen ist.

Die erfindungsgemäß aufgebaute Ringbrennkammer zeichnet sich durch einen einfachen und funktionsgerechten Aufbau mit einer geringen Anzahl von Teilen aus. Im Gegensatz zu bekannten Ringbrennkammerkonstruktionen, bei denen für einen zweischaligen Aufbau der Ringbrennkammer eine Auskleidung aus einer Vielzahl von typischerweise aus Keramik gebildeten Auskleidungselementen angeordnet ist, weist die erfindungsgemäße Ringbrennkammer anstelle der Auskleidung einen einfachen Liner (einen sogenannten Liner) auf, in welchem das Heißgas geführt wird. Die Wahl eines einzigen Liners anstelle einer Vielzahl von Auskleidungselementen reduziert die Anzahl der benötigten Teile erheblich, der Aufbau wird vereinfacht. Zudem kann eine sehr gute Abdichtung des im Inneren des Liners gelegenen Raums zur Führung der Heißgase und dem zwischen dem Liner und der Außenwandung gelegenen Spaltraum erzielt werden. Aufgrund dieser Tatsache eignet sich die erfindungsgemäße Ringbrennkammer besonders gut für den Liner einer geschlossenen Luftkühlung. Durch die im wesentlichen vollständige Abdichtung zwischen dem Spaltraum und dem Heißgas führenden Innenbereich des Liners kann die zur Kühlung des Liners verwendete Luft vollständig dem Brenner zur Verbrennung zugeführt werden. Die Kühlluft wird dabei vorzugsweise im Gegenstromprinzip entgegen dem im Inneren des Liners laufenden Heißgasstrom geführt. Die während der Kühlung von der Kühlluft aufgenommene Wärme wird dadurch, dass die Kühlluft als Verbrennungsluft verwendet wird, dem Prozeß wieder zugeführt, geht somit nicht verloren und trägt zu einer hohen Effizienz der Verbrennung bei.

Gemäß einer vorteilhaften Weiterbildung der Erfindung ist der Liner aus einem Metallblech mit geringer Stärke gebildet. Die Verwendung eines solchen, aus einem dünnen Metallblech gebildeten Liners ergibt einerseits einen materialsparenden Aufbau, andererseits führt die dünne Wandstärke dazu, dass der über die Wand des Liners anfallende Temperaturgradient gering gehalten werden kann. Diese Tatsache trägt zur Möglichkeit einer effizienten Kühlung bei, da durch Kühlung des Liners auf der Außenseite die auf der Innenseite des Liners herrschenden Temperaturen gering gehalten werden können. Die Ausbildung eines geringen Temperaturgradienten über die Wandung des Liners führt zudem zu vergleichsweise niedrigen thermischen Spannungen im Material des Liners und trägt somit zu einer hohen Lebensdauer des Liners bei. Ein einfacher und kostengünstiger Aufbau eines solchen, aus einem Metallblech geringer Stärke gebildeten Liners ergibt sich, wenn dieser aus miteinander verschweißten, vorzugsweise UP-verschweißten, Ringsegmenten gebildet ist.

Zur Kompensation von aufgrund unterschiedlicher thermischer Ausdehnungen entstehenden Relativbewegungen zwischen dem Liner und der Außenwandung der Ringbrennkammer wird in einer weiteren, vorteilhaften Weiterbildung der Erfindung vorgeschlagen, dass der Liner am Übergang der Ringbrennkammer zum Turbinenraum relativ zu der Außenwandung festgelegt ist und sich im übrigen mit entlang seiner Oberfläche verteilt angeordneten, elastischen Aufhängungen relativ bewegbar zu der Außenwandung an dieser abstützt. Durch die Festlegung des Liners an der Außenwandung an lediglich einem Punkt und die über den übrigen Bereich verteilte Anordnung elastischer Aufhängungen werden die bei unterschiedlichen Betriebszuständen der Ringbrennkammer auftretenden, variierenden thermischen Ausdehnungen kompensiert. Durch die elastischen Aufhängungen werden dabei Ausbeulungen und Ovalverformungen des Liners verhindert. Die elastischen Aufhängungen sind zu diesem Zweck vorzugsweise durch eine in Richtung der Außenwandung federbelastete, relativ verschiebbare Verbindung zwischen Liner und Außenwandung gebildet. Durch die in Richtung der Außenwandung gerichtete Federbelastung üben die elastischen Aufhängungen permanent eine Zugkraft auf den Liner aus, welche den Liner in seiner Form stabilisiert. Um ein Schwingen des Liners zu verhindern, weisen die elastischen Aufhängungen vorzugsweise eine Reibungsdämpfung auf.

Für eine weitere Stabilisierung des Liners ist dieser gemäß einer weiteren vorteilhaften Weiterbildung der Erfindung mit in seiner Umfangsrichtung verlaufenden Versteifungsstrukturen, vorzugsweise Versteifungssicken versehen.

Die Anordnung der Versteifungsstrukturen bzw. der elastischen Aufhängungen kann dabei in in Längsrichtung des Liners variierenden Abständen, abhängig von den statischen bzw. dynamischen Versteifungsanforderungen ausgebildet sein.

Um die erfindungsgemäße Ringbrennkammer wartungsfreundlich aufzubauen, ist gemäß einer vorteilhaften Weiterbildung der Erfindung vorgesehen, dass der Liner und/oder die Außenwandung aus mindestens zwei axial getrennten Teilstücken aufgebaut ist, die entlang einer Flanschlinie miteinander verbunden sind. Eine solche axiale Trennung der genannten Bauteile ermöglicht eine mit vergleichsweise geringem Aufwand durchzuführende Wartung. So muß zur Demontage der Brennkammer nicht das gesamte Turbinengehäuse geöffnet werden, die Ringbrennkammersegmente können, nachdem sie voneinander gelöst worden sind, vergleichsweise einfach aus der Turbine entnommen werden. Eine Entnahme des Rotors ist nicht erforderlich.

Um den Liner temperaturbeständiger zu gestalten, wird gemäß einer weiteren vorteilhaften Weiterbildung der Erfindung vorgeschlagen, diesen auf seiner an das Heißgas angrenzenden Innenseite mit einer Wärmedämmschicht zu versehen. Diese kann vorzugsweise in Form eines Atmospheric-Plasma-Sprays (APS) aufgebracht werden. Alternativ kann der Liner innenseitig jedoch auch mit einer sehr dünnen Anti-Oxidationsschicht geschützt sein.

Zur Abdichtung der Lineröffnung, durch welche der Brenner in den Liner hineinragt, wird gemäß einer vorteilhaften Weiterbildung der Erfindung eine Kolbenringdichtung vorgeschlagen. Eine solche Kolbenringdichtung eignet sich hervorragend zur Abdichtung des äußeren, Kühlluft durchströmten Bereiches gegenüber dem Innenbereich des Liners, in welchem das Heißgas geführt ist.

Um eine effiziente Kühlung des Liners zu erhalten, wird gemäß einer weiteren vorteilhaften Weiterbildung der Erfindung vorgeschlagen, den Liner prallzukühlen. Hierzu wird die Kühlluft durch eine Anordnung von Durchtrittsöffnungen direkt auf die äußere Oberfläche des Liners geleitet, prallt dort auf diese auf und bewirkt einen intensiven Kühleffekt. Da sich aufgrund der Geschwindigkeits- und Temperaturverteilung des im Inneren des Liners geführten Heißgasstromes unterschiedliche Kühlanforderungen ergeben, ist es von Vorteil, wenn die Kühlung des Liners in entsprechend den Kühlungsanforderungen aufgeteilten Zonen unterschiedlich erfolgt. Gemäß einer vorteilhaften Weiterbildung der Erfindung sind im Bereich einer Eintrittszone, in der das Heißgas aus dem Brenner in die Brennkammer eintritt, in dem zwischen der Außenwandung und dem Liner belassenen Zwischenraum Prallkühlsegmente angeordnet. Diese sind beispielsweise durch aus Metallblechen aufgebaute Hohlkästen gebildet, welche in ihrer der Außenseite des Liners gegenüberliegenden Fläche ein duschenartig ausgebildetes Öffnungsmuster aufweisen. Durch dieses Öffnungsmuster hindurch wird die in die Hohlkästen eingeleitete Kühlluft geführt und sorgt somit in dem thermisch besonders beanspruchten Eintrittsbereich für eine hocheffiziente Prallkühlung. Insbesondere wird der durch die Prallkühlungssegmente geleitete Luftstrom durch die Trennung vom sonstigen Luftstrom vor den Prallkühleffekt mindernden Querströmungen geschützt.

Um auch die Außenwandung der Ringbrennkammer möglichst materialsparend aufzubauen, wird mit der Erfindung vorgeschlagen, diese mit einer geringen Wandstärke auszubilden und über Versteifungsstrukturen, vorzugsweisen Versteifungsrippen, zu stabilisieren. Die Versteifungsrippen verlaufen dabei vorzugsweise in Umfangsrichtung.

Für eine Abdichtung der Brennerdurchführung durch das Außengehäuse wird gemäß der Erfindung mit Vorteil eine Labyrinthdichtung vorgeschlagen. Eine solche Labyrinthdichtung bietet eine einfache und leckarme Abdichtung zwischen der in dem Zwischenraum zwischen Liner und Außengehäuse geführten Kühlluft und der ausserhalb des Außengehäuses der Ringbrennkammer innerhalb eines druckdichten Außengehäuses befindlichen Luft.

Weiterhin wird mit der Erfindung vorgeschlagen, dass die erste Leitschaufelreihe der Turbine fest mit der Ringbrennkammer verbunden ist. Bei Turbinen üblicher Bauart ist die erste Leitschaufelreihe an einem Leitschaufelträger gekoppelt und "pendelnd" aufgehängt, da an dieser Stelle große thermische Differenzwege auftreten. Durch die erfindungsgemäße Integration der ersten Leitschaufelreihe in die Ringbrennkammer werden die großen thermischen Differenzwege an dieser Stelle vermieden. Die Fixierung zwischen der ersten Leitschaufelreihe und der Ringbrennkammer, an nur einem Punkt, nämlich dem Punkt, an dem der Liner mit der Außenwandung der Ringbrennkammer fixiert ist, bildet für den heißen Liner einen axialen Festpunkt, so dass nur radiale thermische Differenzverformungen aufzunehmen sind.

Mit der Erfindung wird schließlich eine neuartige Gasturbine angegeben, in welcher eine erfindungsgemäße Ringbrennkammer integriert ist.

Weitere Merkmale und Vorteile der Erfindung ergeben sich für einen Fachmann aus der nachfolgenden Beschreibung eines Ausführungsbeispiels anhand der beigefügten Figuren. Dabei zeigen:
- Fig. 1: schematisch im Längsschnitt eine erfindungsgemäße Ringbrennkammer sowie deren Ausrichtung in Bezug auf weitere Turbinenteile,
- Fig. 2: schematisch in vergrößerter Darstellung einen Querschnitt durch eine erfindungsgemäße Ringbrennkammer gemäß dem oberen Abschnitt aus Fig. 1,
- Fig. 3: in perspektivischer Ansicht einen Liner der erfindungsgemäßen Ringbrennkammer,
- Fig. 4a: in teilweise geschnittener Ansicht einen Abschnitt der Einlaßzone des Liners einer erfindungsgemäßen Ringbrennkammer,
- Fig. 4b: im Detail einen Verbindungsflansch zwischen einem Innensegment und einem Außensegmet des Liners,
- Fig. 5: in vergrößerter Darstellung einen Querschnitt durch eine in dem Liner einer erfindungsgemäßen Ringbrennkammer ausgebildete Verstärkungssicke und
- Fig. 6: den Aufbau einer elastischen Aufhängung des Liners an der Außenwandung der erfindungsgemäßen Ringbrennkammer.

Die Figuren sind nicht maßstabsgerecht und dienen lediglich der Erläuterung. In den Figuren sind gleiche Elemente mit gleichen Bezugszeichen versehen.

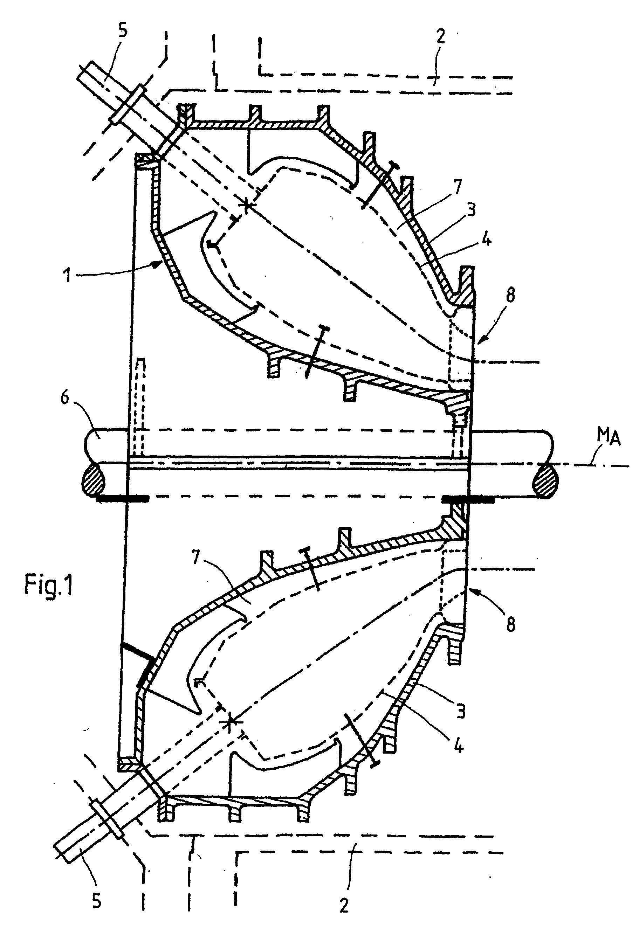

In Fig. 1 ist in schematischer Darstellung ein Längsschnitt durch eine erfindungsgemäße Ringbrennkammer 1 sowie deren Lage in Bezug auf weitere Komponenten der Turbine gezeigt. Die Ringbrennkammer 1 ist in einem druckfesten Außengehäuse 2 angeordnet. Sie wird begrenzt durch eine Außenwandung 3, in die ein ringförmiger Liner 4 zur Führung von Heißgas eingesetzt ist. Zwischen der Außenwandung 3 und dem Liner 4 verbleibt ein Spaltraum 7 zur Durchleitung eines Kühlmediums. In die Ringbrennkammer 1 sind Brenner 5 eingelassen. Die Brenner 5 münden in den Liner 4, von wo aus die in den Brennern 5 gezündeten Heißgase in Richtung des der Brennerseite strömungstechnisch gegenüberliegenden Ringbrennkammeraustritts 8 gelangen. Mittig durch die Ringbrennkammer 1 hindurchgeführt verläuft eine Rotorwelle 6, die sich entlang einer Maschinenachse MA der Turbine erstreckt. In dieser Darstellung ist gut zu erkennen, dass die Ringbrennkammer 1 zur Maschinenachse MA unter einem Winkel angestellt verläuft, wobei der Heißgasstrom im Übergangsbereich zwischen der Ringbrennkammer 1 und dem dieser nachgeschalteten Turbinenraum in Richtung der Maschinenachse umgelenkt wird.

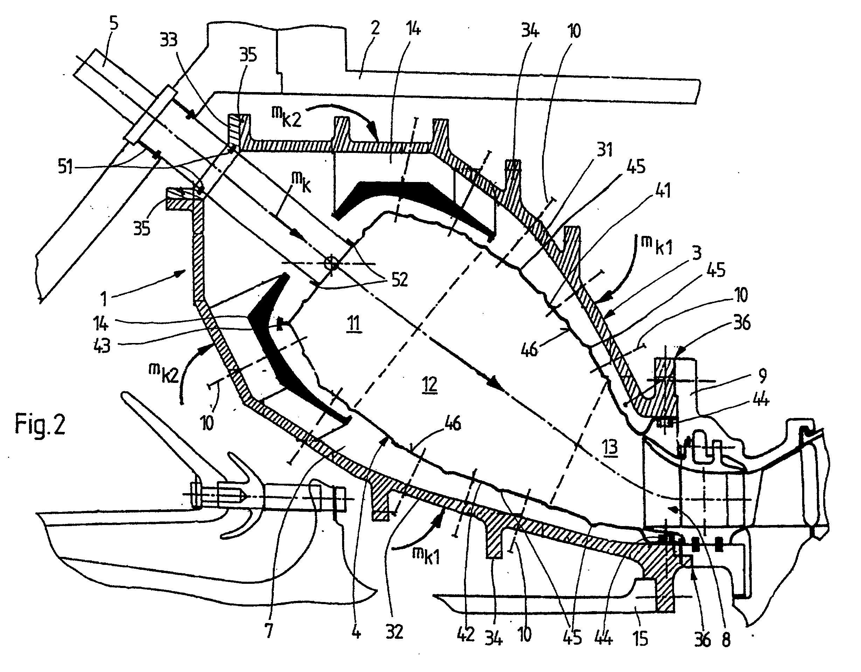

In einer ebenfalls schematischen, vergrößerten Darstellung ist in Fig. 2 der in Fig. 1 dargestellte obere Abschnitt der Schnittdarstellung durch die erfindungsgemäße Ringbrennkammer 1 gezeigt. Wie in dieser Darstellung zu erkennen ist, ist die Außenwandung 3 aus insgesamt 3 Teilsegmenten aufgebaut, nämlich einem Außensegment 31, einem Innensegment 32 sowie einem Brennerdurchtrittssegment 33. Die einzelnen Segmente sind über Flanschverbindungen 35 miteinander verbunden bzw. über Flanschverbindungen 36 mit dem ersten Turbinenleitschaufelring 9 verbunden. Auch der Liner 4 ist aus Teilsegmenten zusammengesetzt, nämlich einem Außensegment 41 und einem Innensegment 42. Beide Segmente sind an einem Flansch 43 miteinander verbunden. Der Liner ist im Bereich des Brennkammeraustritts 8 über Bolzen 44 fest mit der Außenwandung 3 verbunden. Im übrigen Bereich ist der Liner 4 über in der Figur schematisch angedeutete elastische Abstützungen mit der Außenwandung 3 relativ verschiebbar zu dieser verbunden. Mittels der elastischen Abstützung 10 können somit Unterschiede in der thermischen Ausdehnung einerseits und beispielsweise durch die Gasströme hervorgerufene mechanische Bewegungen zwischen der Außenwandung 3 und dem Liner 4 andererseits ausgeglichen werden. Der gesamte Ringbrennkammerverbund stützt sich auf dem Wellenschutz 15 ab.

Ein Brenner 5 durchtritt das druckdichte Außengehäuse 2, wird durch eine Öffnung im Brennerdurchtrittssegment 33 der Außenwandung 3 geführt und mündet schließlich in dem Liner 4. Die Durchführung durch das Brennerdurchtrittssegment 33 der Außenwandung 3 ist mittels einer Labyrinthdichtung 51 abgedichtet, den Eintritt des Brenners 5 in den Liner 4 dichtet eine Kolbenringdichtung 52 ab.

Für eine Versteifung des aus einem dünnwandigen Metallblech aufgebauten Liners 4 weist dieser entlang seines Umfangs verlaufende Versteifungssicken 45 auf. Die Versteifungssicken 45 verhindern gemeinsam mit den elastischen Aufhängungen 10 ein Ausbeulen sowie eine Ovalisierung des Liners 4. Als Schutz gegen die im Inneren des Liners 4 geführten Heißgase ist dieser auf seiner Innenseite mit einer Beschichtung 46, vorzugsweise einer Wärmedämmschicht oder mindestens einer Anti-Oxidationsschicht versehen. Eine Wärmedämmschicht kann dabei als sogenanntes APS (Atmospheric-Plasma-Spray) aufgebracht sein. Wärmedämmschichten haltbarer Dicke können die heißgasseitigen Temperaturen um ca. 120°C reduzieren, so dass sich bei den vorliegenden Wärmestromdichten am Liner 4 maximale Metalltemperaturen von ca. 750°C sowie vernünftige Wärmespannungs- bzw. Lebendauerwerte ergeben.

Im Bereich einer Einlasszone 11 des Liners 4 sind in dem zwischen Außenwandung 3 und Liner 4 gebildeten Spaltraum 7 Prallkühlsegmente 14 angeordnet. Die Prallkühlsegmente sind als metallische Hohlkästen ausgebildet. Diesen Prallkühlsegmenten 14 wird gesondert Kühlluft zugeführt, und sie weisen auf ihrer dem Liner 4 zugewandten Oberfläche ein duschkopfartiges Öffnungsmuster auf, durch welches Kühlluft gezielt auf die Oberfläche des Liners 4 in diesem Bereich geleitet wird. Durch die Wahl des Abstandes zwischen den Prallkühlsegmenten 14 und der Oberfläche des Liners 4 sowie der Anzahl, der Verteilung und dem Durchmesser der in den Prallkühlsegmenten 14 ausgebildeten Öffnungen kann in der thermisch besonders belasteten Einlasszone 11 eine hocheffiziente Kühlung bewirkt werden. Insbesondere wird die durch die Prallkühlsegmente 14 geleitete Kühlluft nicht von störenden Querströmungen abgelenkt, was eine hohe Prallkühleffizienz ermöglicht.

An die Einlasszone 11 schließen sich ein Mittelabschnitt 12 sowie eine Auslasszone 13 an.

Im Bereich des Mittelabschnitts 12 des Liners 4 wird dieser mittels durch die Öffnungsanordnung in der Außenwandung 3 auf den Liner 4 geleitete Kühlluft prallgekühlt. Auch die Auslasszone 13 erfährt eine Prallkühlung. Zur Kühlung des Liners 4 wird der Kühlluftstrom in zwei Teile aufgeteilt, wobei ein erster Teil mₖ₁ durch die in der Außenwandung 3 ausgebildeten Öffnungen hindurch zur Prallkühlung des Mittelabschnittes 12 bzw. der Auslasszone 13 verwendet wird, ein zweiter Teil mₖ₂ direkt den Prallkühlsegmenten 14 zugeführt wird und über diese zur Prallkühlung der Einlasszone 11 eingesetzt wird. Die gesamte Kühlluft der Kühlluftströme mₖ₁ und mₖ₂ werden zusammen als Kühlluftstrom mₖ dem Brenner zugeführt und dort vollständig als Verbrennungsluft genutzt. Auf diese Weise wird eine geschlossene Luftkühlung realisiert, die eine hohe Effizienz der Gasturbine ermöglicht. Die von der Kühlluft aufgenommene Wärme wird dem System wieder zugeführt, geht also nicht verloren.

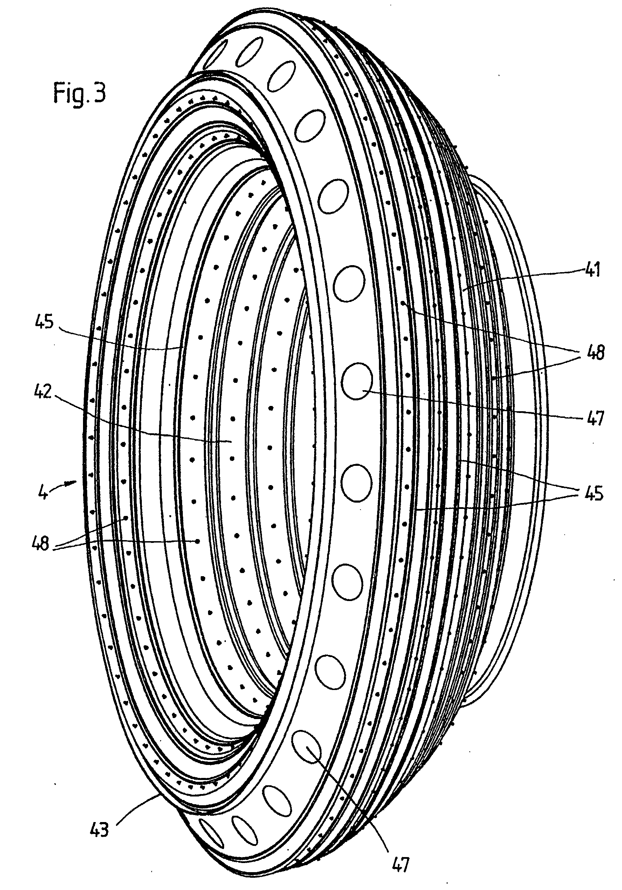

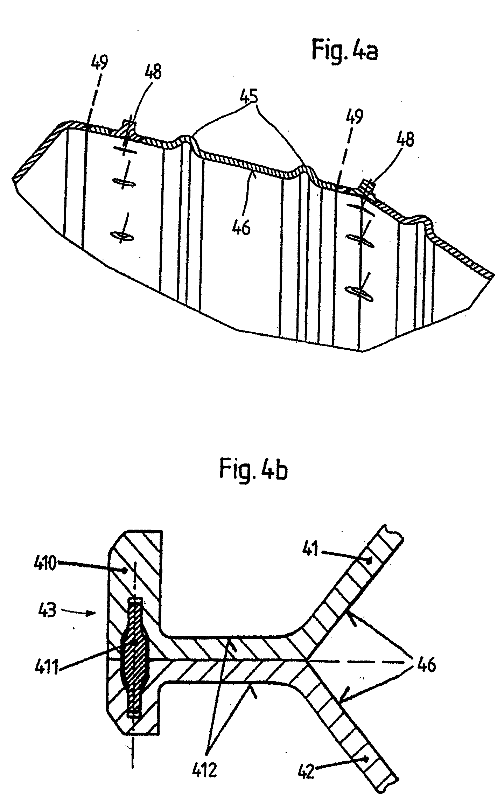

In Fig. 3 ist in perspektivischer Darstellung der Liner 4 der erfindungsgemäßen Ringbrennkammer 1 dargestellt. Zu erkennen sind hier neben den entlang des Umfanges verlaufenden Verstärkungssicken 45 Ansatzpunkte 48 für elastische Aufhängungen 10. Weiterhin sind gleichmäßig verteilte Brenneröffnungen 47 zu erkennen, in welche die ringförmig angeordneten Brenner 5 münden. Der Liner 4 ist aus einzelnen, ringförmigen Blechsegmenten aufgebaut, die über Schweißnähte 49 (Fig. 4a), vorzugsweise UP-Schweißnähte miteinander verbunden sind. Dieser Aufbau ermöglicht eine kostengünstige und einfache Herstellung eines Liners 4 für eine erfindungsgemäße Ringbrennkammer.

In Fig. 4b ist eine Detailansicht des Flansches 43 zum Verbinden des Innensegmentes 42 sowie des Außensegmentes 41 des Liners 4 gezeigt. Zu erkennen ist, daß sich an dieser Stelle Innensegment 42 und Außensegment 41 treffen, wobei der Flansch 43 am Ende eines schlanken Abschnittes in einem wulstartigen Versteifungsring 410 endet. Dieser beugt einem Einbeulen des Außensegments 41 vor. Entlang des schmalen Bereichs des Flansches 43 sind das dort aufeinander treffende Innensegment 42 sowie das Außensegment 41 außenseitig mit einer lokalen Außenbeschichtung 412 zur Vergleichmäßigung der Metalltemperaturen versehen. Im Inneren des Versteifungsringes 410, der zu einem Teil durch das Innensegment 42 zu einem anderen Teil durch das Außensegment 41 des Liners 4 gebildet wird, ist in einen Hohlraum ein Dichtblech 411 zum Abdichten des Flansches 43 eingesetzt.

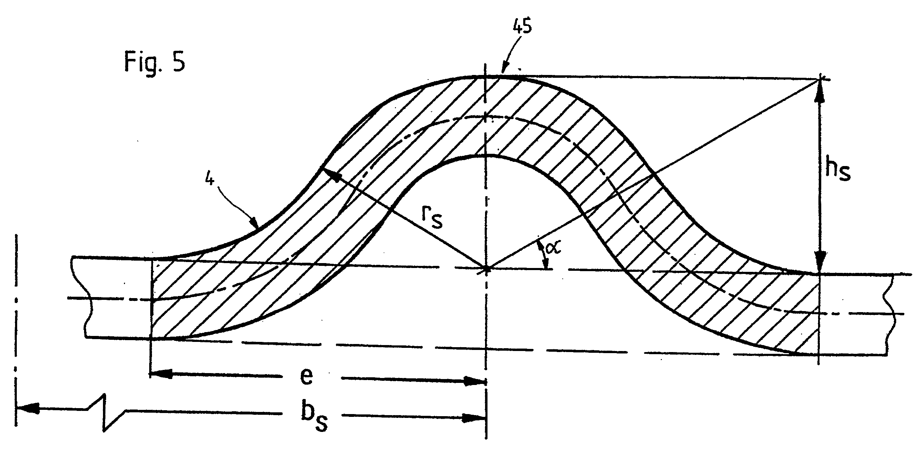

In Fig. 5 ist in vergrößerter Darstellung ein Schnitt durch eine Verstärkungssicke 45 des Liners 4 dargestellt. In dieser Darstellung sind die bevorzugten relevanten Abmessungen der Verstärkungssicke 45 zu erkennen. Mit hₛ ist die Höhe der Sicke bezeichnet, welche im gezeigten Ausführungsbeispiel gleich einem Sickenradius rₛ gewählt ist. Als Sickenbreite e ergibt sich somit e = hₛ x cotan α wobei α der zeichnerisch dargestellte Winkel ist. Der mit bₛ bezeichnete Sickenabstand wird ebenso wie die Sickenbreite e und die Sickenhöhe hₛ entsprechend den mechanischen Versteifungsanforderungen gewählt; die Geometrie der Sicke kann über die Längserstreckung des Liners 4 variierend gewählt sein.

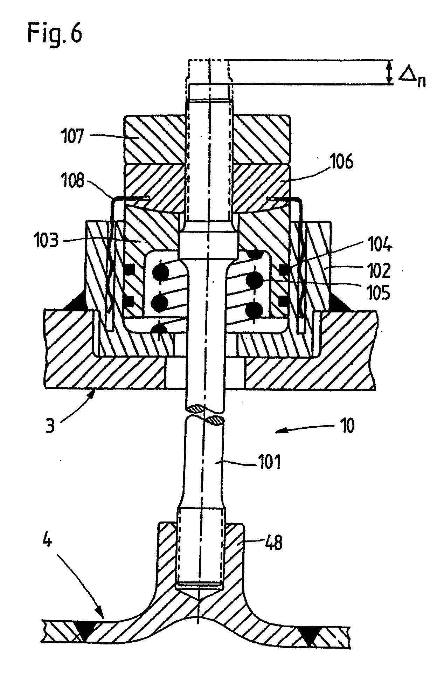

In Fig. 6 schließlich ist im Detail eine elastische Aufhängung 10 zwischen dem Liner 4 und der Außenwandung 3 dargestellt. Ein Zugbolzen 101 ist mit einem Linerpunkt 48 des Liners 4 verschraubt. Der Zugbolzen 101 durchstößt die Außenwandung 3 und durchragt ein an dieser Stelle in die Außenwandung 3 eingesetztes Gehäuse 102. In das Gehäuse 102 ist ein Kolben 103 eingesetzt und gegenüber dem Gehäuse 102 mittels Dichtungen 104 abgedichtet. Zwischen dem Gehäuse 102 und dem Kolben 104 ist eine Schraubenfeder 105 eingesetzt. Die Schraubenfeder übt eine von dem Gehäuse 102 weg gerichtete Druckkraft auf den Kolben 103 aus. Der Zugbolzen 101 ist mittels einer Einstellmutter 106 mit dem Kolben 103 verbunden, wobei die an dem Kolben 103 anliegende Oberfläche der Einstellmutter 106 konvex, die zugehörige Oberfläche des Kolbens 103 konkav ausgebildet ist. Auf diese Weise wird zwischen der Einstellmutter und dem Kolben 103 ein Kugelsitz ausgebildet. Zur Sicherung der Festlegung des Zugbolzens ist eine Kontermutter 107 gegen die Einstellmutter 106 verspannt. Zum Ausgleich von Relativbewegungen zwischen dem Liner 4 und der Außenwandung 3 kann sich der Kolben 103 in dem Gehäuse 102 in Längsrichtung des Zugbolzens 101 bewegen. Durch die Schraubenfeder 105 wird auf den Zugbolzen 101 ständig eine in Richtung der Außenwandung 3 gerichtete Zugkraft ausgeübt, der Liner 4 wird vorgespannt. Um Schwingungen des Liners 4 zu verhindern, ist in einen Schlitz der Einstellmutter 106 ein Reibdämpfungselement 108 eingesetzt, welches in einer gewellten Struktur in einen in Erstreckungsrichtung des Zugbolzens 101 verlaufenden, in dem Gehäuse 102 ausgebildeten Schlitz mündet. Durch die wellenartige Ausbildung des Reibdämpfungselementes 108 in diesem Bereich entstehen zwischen dem Gehäuse 102 und dem Reibdämpfungselement 108 in diesem Bereich hohe Reibkräfte, die Relativbewegungen zwischen dem Liner 4 und der Außenwandung 3 dämpfen und somit das Entstehen von Schwingungen verhindern. Mit Δn ist eine thermische Relativausdehnung des Liners 4 angedeutet, die über die elastischen Aufhängungen kompensiert wird.

Das gezeigte Ausführungsbeispiel dient lediglich der Erläuterung und ist nicht beschränkend.

Mit der Erfindung wird eine Ringbrennkammer angegeben, die einfach und aus wenigen Teilen aufgebaut ist und die sich insbesondere zur Kühlung mittels einer geschlossenen Luftkühlung eignet.

### Bezugszeichenliste

- 1: Ringbrennkammer
- 2: Außengehäuse
- 3: Außenwandung
- 31: Außensegment
- 32: Innensegment
- 33: Brennerdurchtrittsegment
- 34: Versteifungsrippe
- 35: Flanschverbindung
- 36: Flanschverbindung
- 4: Liner
- 41: Außensegment
- 42: Innensegment
- 43: Flansch
- 44: Bolzen
- 45: Sicke
- 46: Beschichtung
- 47: Brenneröffnung
- 48: Ansatzpunkt
- 49: Schweißnaht
- 410: Versteifungsring
- 411: Dichtblech
- 412: Beschichtung
- 5: Brenner
- 51: Labyrinthdichtung
- 52: Kolbenringdichtung
- 6: Rotorwelle
- 7: Spaltraum
- 8: Ringbrennkammeraustritt
- 9: erster Turbinenleitschaufelring
- 10: elastische Abstützung
- 101: Zugbolzen
- 102: Gehäuse
- 103: Kolben
- 104: Dichtung
- 105: Schraubenfeder
- 106: Einstellmutter
- 107: Kontermutter
- 108: Reibdämpfungselement
- 11: Einlasszone
- 12: Mittelabschnitt
- 13: Auslasszone
- 14: Prallkühlsegment
- 15: Wellenschutz
- bₛ: Sickenabstand
- e: Sickenbreite
- hₛ: Sickenhöhe
- r_{S}: Radius
- MA: Maschinenachse
- mₖ₁: Kühlluftstrom
- mₖ₂: Kühlluftstrom
- mₖ: Kühlluftstrom
- Δn: thermische Relativausdehnung des Liners

## Patentansprüche

1. Ringbrennkammer für eine Gasturbine mit mindestens einer Einlassöffnung für einen Brenner (5) und einem in einen Turbinenraum mündenden Auslass (8), wobei die Ringbrennkammer (1) eine einen Ringraum begrenzende Außenwandung (3) und einen in dem Ringraum angeordneten, ringförmigen Liner (4) zum Führen von Heißgas von der mindestens einen Eintrittsöffnung zu dem Auslass (8) aufweist, wobei zwischen dem Liner (4) und der Außenwandung (3) ein Spaltraum (7) zur Durchströmung mit einem Kühlmedium belassen ist.

2. Ringbrennkammer nach Anspruch 1,
**dadurch gekennzeichnet, dass** durch den Spaltraum (7) Kühlluft für eine geschlossene Luftkühlung durchleitbar ist.

3. Ringbrennkammer nach einem der voranstehenden Ansprüche,
**dadurch gekennzeichnet, dass** der Liner (4) aus einem Metallblech mit geringer Stärke gebildet ist.

4. Ringbrennkammer nach Anspruch 3,
**dadurch gekennzeichnet, dass** der Liner (4) aus einzelnen, miteinander verschweißten, vorzugsweise UP-verschweißten, Ringsegmenten aufgebaut ist.

5. Ringbrennkammer nach einem der voranstehenden Ansprüche,
**dadurch gekennzeichnet, dass** der Liner (4) am Übergang der Ringbrennkammer (1) zum Turbinenraum relativ zu der Außenwandung (3) festgelegt ist und sich im übrigen mit entlang seiner Oberfläche verteilt angeordneten, elastischen Aufhängungen (10) relativ bewegbar zu der Außenwandung (3) an dieser abstützt.

6. Ringbrennkammer nach Anspruch 5,
**dadurch gekennzeichnet, dass** die elastischen Aufhängungen (10) durch in Richtung der Außenwandung (3) federbelastete, zwischen Liner (4) und Außenwandung (3) relativ verschiebbar angeordnete Verbindungen gebildet sind.

7. Ringbrennkammer nach einem der Ansprüche 5 oder 6,
**dadurch gekennzeichnet, dass** die elastischen Aufhängungen (10) Reibungsdämpfungen aufweisen.

8. Ringbrennkammer nach einem der voranstehenden Ansprüche,
**dadurch gekennzeichnet, dass** der Liner (4) Versteifungsstrukturen, vorzugsweisen Versteifungssicken (45) aufweist.

9. Ringbrennkammer nach einem der voranstehenden Ansprüche,
**dadurch gekennzeichnet, dass** der Liner (4) und/oder die Außenwandung (3) aus mindestens zwei, in axialer Richtung voneinander getrennten Teile aufgebaut sind, welche über Flanschverbindungen miteinander verbunden sind.

10. Ringbrennkammer nach einem der voranstehenden Ansprüche,
**dadurch gekennzeichnet, dass** der Liner (4) auf seinen dem Heißgas ausgesetzten Oberflächen eine Beschichtung (46), vorzugsweise eine Wärmedämmschicht oder eine Anti-Oxidations-Schicht aufweist.

11. Ringbrennkammer nach einem der voranstehenden Ansprüche,
**dadurch gekennzeichnet, dass** der Eintritt des Brenners (5) in den Liner (4) mittels einer Kolbenringdichtung (52) abgedichtet ist.

12. Ringbrennkammer nach einem der voranstehenden Ansprüche,
**dadurch gekennzeichnet, dass** sie Strukturen zur Prallkühlung des Liners (4) aufweist.

13. Ringbrennkammer nach Anspruch 12,
**gekennzeichnet durch** Prallkühlsegmente (14) im Bereich einer Einlasszone (11), in der der Brenner (5) in den Liner (4) mündet.

14. Ringbrennkammer nach einem der voranstehenden Ansprüche,
**dadurch gekennzeichnet, dass** die Außenwandung (3) Versteifungsstrukturen, vorzugsweisen Versteifungsrippen (34), aufweist.

15. Ringbrennkammer nach einem der voranstehenden Ansprüche,
**dadurch gekennzeichnet, dass** der Durchtritt des Brenners (5) durch die Außenwandung (3) mittels einer Labyrinthdichtung (51) abgedichtet ist.

16. Ringbrennkammer nach einem der voranstehenden Ansprüche,
**dadurch gekennzeichnet, dass** der erste Turbinenleitschaufelring (9) mit der Ringbrennkammer (1) verbunden ist.

17. Gasturbine, **gekennzeichnet durch** eine Ringbrennkammer nach einem der Ansprüche 1 bis 16.
